# EUROPÄISCHE PATENTSCHRIFT

(11) **EP 1 767 275 B1**
(45) Veröffentlichungstag und Bekanntmachung des Hinweises auf die Patenterteilung: **21.04.2010**
(21) Anmeldenummer: 06012325.4
(22) Anmeldetag: 14.06.2006
(51) Int. Cl.: B04B 5/04

(54) **Ausschwingrotor und Gefässaufhängung für Schwenkbecherzentrifuge**
Rotor and bucket support for swinging bucket centrifuge
Rotor et support de godets pour centrifugeuse à godets pivotants

(30) Priorität: 26.09.2005 EP 05020948
(43) Veröffentlichungstag der Anmeldung: 28.03.2007
(73) Patentinhaber: Thermo Electron LED GmbH, 63505 Langenselbold (DE)
(72) Erfinder: Eigemeier, Frank, 37520 Osterode-Dorste (DE)
(74) Vertreter: Lang, Friedrich

(56) Entgegenhaltungen:
- US-A- 3 935 995
- US-A- 4 141 489
- US-A- 4 254 905
- US-A- 4 400 166

## Beschreibung

Die Erfindung betrifft einen Ausschwingrotor für eine Schwenkbecherzentrifuge zur Aufhängung von Gefäßaufhängungen mit jeweils mindestens zwei Halteelementen, umfassend eine Mehrzahl von radial angeordneten Rotorarmen, welche an ihren äußeren Enden jeweils mindestens eine Aufnahme aufweisen, in die mindestens ein Halteelement einer Gefäßaufhängung schwenkbar einsetzbar ist, so dass jeweils eine Gefäßaufhängung zwischen zwei benachbarten Rotorarmen einhängbar ist, wobei die Gefäßaufhängung dann um die durch ihre beiden Halteelemente definierte, horizontale, zur Rotationsachse des Rotors tangentiale Achse schwenkbar gelagert ist und während einer Rotation des Rotors durch eine Zentrifugalkraft nach außen oben ausschwenkt, und wobei an jedem Rotorarm mindestens ein Anschlagelement zur Begrenzung des Ausschwingwinkels der Gefäßaufhängung vorgesehen ist. Die Erfindung betrifft weiterhin eine Gefäßaufhängung zur Verwendung in einem Ausschwingrotor, eine Schwenkbecherzentrifuge und ein System zur Gefäßaufhängung in einer Schwenkbecherzentrifuge.

Bei Rotoren in Laborzentrifugen sind verschiedene Systeme bekannt. Dies sind einerseits Festwinkelrotoren, bei denen der Winkel zwischen Probengefäßen und Rotationsachse unveränderlich ist, und andererseits Ausschwingrotoren, in denen die Probengefäße schwenkbar gelagert sind, so dass sie während der Rotation von einer Zentrifugalkraft aus ihrer Ruheposition ausgelenkt werden. Beide Systeme weisen Vorteile auf, die für unterschiedliche Anwendungen von Bedeutung sind. Für bestimmte Anwendungen hat es sich zusätzlich als besonders günstig herausgestellt, wenn der maximale Ausschwingwinkel bei Ausschwingrotoren auf einen bestimmten Wert begrenzt ist.

Zu diesem Zweck sind Ausschwingrotoren bekannt, bei denen die Ausschwingbecher frei ausschwingen, bis sie beispielsweise an der Wand eines mitrotierenden Rotorkessels anstoßen und dadurch in ihrem Ausschwingwinkel begrenzt werden. Bei den bekannten Zentrifugen besteht jedoch der Nachteil, dass diese jeweils auf einen festen Wert ausgelegt sind und der Ausschwingwinkel nicht für verschiedene Anwendungen angepasst werden kann. Bei einem punktförmigen Anstoß beispielsweise mit der Spitze der Probengefäße an eine Rotorwand werden außerdem die Probengefäße stark belastet und in ihrer Stabilität beeinträchtigt. Zudem ist mit einem mitrotierenden Rotorkessel unter Umständen ein zusätzlicher Aufwand in der Herstellung und in der Handhabung der Zentrifuge verbunden.

Ein weiteres System zur Gefäßaufhängung in einer Schwenkbecherzentrifuge, umfassend eine Gefäßaufhängung und einen Ausschwingrotor zur Aufhängung von Gefäßaufhängungen mit jeweils mindestens zwei Halteelementen, gemäß dem Oberbegriff des Anspruchs 1 ist aus der Druckschrift US 4 141 489 A bekannt.

Vor diesem Hintergrund ist es Aufgabe der Erfindung, einen gattungsgemäßen Ausschwingrotor zu verbessern sowie ein System zur Gefäßaufhängung und eine Gefäßaufhängung anzugeben, welche die genannten Nachteile vermeidet.

Die **Aufgabe** der Erfindung wird gelöst durch ein System gemäß dem unabhängigen Sachanspruch 1. Ein Ausschwingrotor für eine Schwenkbecherzentrifuge zur Aufhängung von Gefäßaufhängungen umfasst eine Mehrzahl von radial angeordneten Rotorarmen. Zwischen je zwei Rotorarmen können Gefäßaufhängungen mit mindestens zwei Haltelementen schwenkbar gelagert werden. Dafür weisen die Rotorarme an ihren äußeren Enden eine Aufnahme auf, in welche die Halteelemente schwenkbar einsetzbar sind.

Die Aufnahmen der Rotorarme wirken zusammen mit den Halteelementen der Gefäßaufhängungen als Schwenklager. Die Schwenkachse einer Gefäßaufhängung wird durch ihre beiden Halteelemente definiert und liegt im eingehängten Zustand tangential zur Rotationsachse des Rotors. Bei einer Zentrifuge mit vertikal ausgerichteter Rotationsachse verläuft sie horizontal. Wenn der Ausschwingrotor beim Betrieb der Zentrifuge rotiert, schwingen die Gefäßaufhängungen durch die resultierende Zentrifugalkraft nach außen aus. Je nach Lage des Schwerpunktes der beladenen Gefäßaufhängungen und der Rotationsgeschwindigkeit schwingen dann die Gefäßaufhängungen bis in die horizontale Lage aus. Gegenüber der Ruheposition mit nach unten hängender Gefäßaufhängung entspricht die horizontale Lage einem Ausschwingwinkel von 90 °.

Erfindungsgemäß ist an jedem Rotorarm mindestens ein Anschlagelement zur Begrenzung des Ausschwingwinkels der Gefäßaufhängung vorgesehen. Dieses Anschlagelement an dem Rotorarm ist als eine Schulter oder eine Rippe ausgestaltet, wobei eine Flanke der Schulter beziehungsweise der Rippe eine Anschlagfläche bildet. Die Anschlagfläche selbst ist demnach länglich ausgebildet und an ihren Längsseiten durch den Ansatz zum Rotorarm und durch eine Kantenlinie begrenzt. Üblicherweise ist das Anschlagelement auf einer Höhe unterhalb des Schwenklagers an den Rotorarmen angebracht. In diesem Fall ist die Anschlagfläche günstigerweise so ausgerichtet, dass sie im Wesentlichen zur Rotationsachse des Rotors hin weist. In dieser Ausrichtung wirkt sie als Anschlagfläche zur Begrenzung von horizontalen Bewegungen in Richtung von der Rotormitte nach außen. Im einfachsten Fall ist die Anschlagfläche als eine Ebene ausgebildet, die dann etwa zur Rotationsachse parallel ausgerichtet sein kann. Darüber hinaus erstreckt sich die Anschlagfläche zweckmäßig in vertikaler Richtung über einen Teil der Höhe eines Rotorarmes. Dies ermöglicht eine relativ große Anschlagfläche, ohne dass diese zu weit in Umfangsrichtung ausgedehnt ist. Konkret kann das Anschlagelement als vertikal verlaufende Kante an dem Rotorarm ausgebildet sein, wobei die Anschlagfläche zur Rotationsachse zeigt. Die Möglichkeit einer ebenen Anschlagfläche ist bevorzugt, jedoch sind auch gekrümmte Anschlagflächen denkbar.

Vorzugsweise entspricht die Zahl der in den Rotor einhängbaren Gefäßaufhängungen der Anzahl der Rotorarme. Dies bedeutet, dass an jedem Rotorarm zu beiden Seiten eine Gefäßaufhängung mit einem Halteelement eingehängt werden kann, wobei jede Gefäßaufhängung mit ihren beiden Halteelementen wiederum an zwei Rotorarmen einhängt. Jeder Rotorarm bietet also eine Aufnahme für zwei Halteelemente. Diese Aufnahme kann als eine gemeinsame Aufnahme für beide Halteelemente ausgestaltet sein oder als zwei getrennte Aufnahmen für jeweils ein Halteelement. Dies bietet den Vorteil, dass auf engem Raum möglichst viele Gefäßaufhängungen und damit Probengefäße gleichzeitig zentrifugiert werden können.

In einer bevorzugten Weiterbildung des Ausschwingrotors ist an beiden gegenüberliegenden Seiten jedes Rotorarmes je ein Anschlagelement vorgesehen. Als gegenüberliegende Seiten sind hier die den jeweils benachbarten Rotorarmen zugewandten Seiten bezeichnet. Damit können Gefäßaufhängungen zu beiden Seiten eines Rotorarmes in ihrem Ausschwingwinkel begrenzt werden. Prinzipiell könnte dafür auch jeweils ein Anschlagelement an jedem Rotorarm ausreichen, so dass jede Gefäßaufhängung auch nur von einer Seite her in ihrem Ausschwingwinkel begrenzt ist. Eine beidseitige und symmetrische Begrenzung des Ausschwingwinkels der Gefäßaufhängungen wirkt sich aber günstig auf die Gesamtstabilität der Anordnung aus. Zweckmäßig ist es auch, wenn die beiden Anschlagelemente zu beiden Seiten der Rotorarme symmetrisch an den Rotorarmen angeordnet sind. Es ist auch denkbar, dass an einer oder beiden Seiten eines Rotorarmes jeweils mehrere Anschlagelemente für verschiedene maximale Ausschwingwinkel vorgesehen sind. Diese könnten beispielsweise auch mit verschiedenen ausgestalteten Gefäßaufhängungen zum Einsatz kommen.

Die Aufnahmen der Rotorarme für die Halteelemente sind vorzugsweise als schräg nach oben zur Mitte des Rotors hin geöffnete Schwenklager ausgebildet. "Schräg" bedeutet in diesem Fall, dass die Öffnung nicht direkt nach oben zeigt, sondern eine horizontale, zur Mitte des Rotors hin gerichtete Komponente hat. Die Aufnahme kann dabei wie ein Haken geformt sein, welcher das Haltelement nicht nur von unten hält, sondern es auch von außen und teilweise von oben her umfasst. Da die Öffnung nicht direkt nach oben zeigt, ist ein Herausheben der Gefäßaufhängungen in rein vertikaler Richtung nicht möglich. Dies ist beispielsweise vorteilhaft, wenn Probengefäße aus der Gefäßaufhängung nach oben herausgezogen werden sollen, und die Gefäßaufhängung selbst durch das Lager zurückgehalten wird.

In einer bevorzugten Weiterbildung des Ausschwingrotors sind die Anschlagelemente integral angeformte Bestandteile der Rotorarme. Je nach Herstellungstechnik des Rotors können sie beispielsweise direkt angegossen oder ausgefräst sein. Alternativ wäre es aber grundsätzlich auch möglich, die Anschlagelemente nachträglich an einem fertigen Rotor anzubringen.

In einer bevorzugten Ausführungsform des Ausschwingrotors sind darüber hinaus die Anschlagelemente an den Rotorarmen schwächer ausgeführt als die Aufnahmen der Rotorarme für die Halteelemente der Gefäßaufhängungen. Hoch belastete Zentrifugenrotoren unterliegen oft einer Gebrauchsdauerbeschränkung. Es ist nicht unüblich, dass solche Rotoren nur für eine bestimmte Anzahl von Laufzyklen zugelassen ist, da es bei einer zu großen Laufzyklenzahl zu einem Bruch am Rotor kommen kann. Es ist daher wünschenswert, dass das Risiko einer Beschädigung der Zentrifuge durch einen solchen Bruch möglichst gering gehalten wird. Dies kann erreicht werden, indem die einzelnen Komponenten des Rotors so dimensioniert sind, dass ein solcher Bruch bevorzugt an einer Stelle auftritt, welche für den weiteren Betrieb der Zentrifuge möglichst ungefährlich ist. Daher ist es bei dem Ausschwingrotor günstig, wenn die Schwenkachse für die Gefäßaufhängungen stabiler ausgeführt ist als die Anschlagelemente. Dies wird am Rotor beispielsweise damit erreicht, dass die Anschlagelemente schwächer dimensioniert sind als die Aufnahmen für die Halteelemente der Gefäßaufhängungen. Kommt es wegen unzulässig langer Gebrauchsdauer zu einem Bruch, so bricht mit hoher Wahrscheinlichkeit zunächst ein Anschlagelement weg, bevor das Lager einer Gefäßaufhängung ausbricht. So kann der gesamte Rotor weiterhin ohne Schaden für die Zentrifuge lauffähig bleiben.

Gegenüber dem Ausbrechen einer Aufnahme für die Halteelemente der Gefäßaufhängungen am Rotor erzeugt ein Wegbrechen eines Anschlagelementes nur eine geringe Rotorunwucht und nur einen geringen Einschlag auf den Zentrifugenkessel, in dem sich der Rotor befindet. Die Aufnahmen der Rotorarme sind dann günstiger Weise zusammen mit den Halteelementen der Gefäßaufhängung weiterhin in der Lage die Gefäßaufhängung sicher zu führen. Das Anschlagelement dient hier also als eine Art Sollbruchstelle, welche bei einer Überlastung des Rotors, beispielsweise aufgrund unzulässig langer Gebrauchsdauer, als erstes nachgibt. Um Beschädigungen an der Zentrifuge zu vermeiden, sollten zweckmäßigerweise auch die Halteelemente der Gefäßaufhängungen stabiler ausgestaltet sein als die Anschlagelemente am Rotor. Zusammen mit den Aufnahmen der Rotorarme für die Halteelemente sind damit die Schwenkachsen der Gefäßaufhängungen vergleichsweise stabil, während ein möglicherweise auftretender Bruch zuerst an einem der Anschlagelemente der Rotorarme auftreten wird.

Die Aufgabe der Erfindung wird außerdem gelöst durch eine Gefäßaufhängung zur Verwendung in einem Ausschwingrotor, welche mindestens ein als Rippe oder Schulter ausgebildetes Anschlagelement mit einer zu einer Anschlagfläche eines Rotorarmes komplementär ausgestalteten Anstoßfläche aufweist, so dass dieses beim Ausschwingen der Gefäßaufhängung unter einem vorbestimmten Ausschwingwinkel an ein Anschlagelement eines Rotorarmes anstößt und somit den Ausschwingwinkel auf diesen vorbestimmten Ausschwingwinkel begrenzt.

Eine solche Gefäßaufhängung weist mindestens zwei Halteelemente auf, mit denen sie in die Aufnahmen von jeweils zwei benachbarten Rotorarmen eingehängt werden kann. Die Halteelemente der Gefäßaufhängungen befinden sich vorzugsweise an gegenüberliegenden Seiten der Gefäßaufhängungen und sind kegelstumpfförmig oder zylindrisch ausgebildet. Sie definieren die Schwenkachse, um welche die Gefäßaufhängung im in den Rotor eingehängten Zustand schwenkbar gelagert ist. Vorzugsweise geht diese Schwenkachse durch das Volumen der Gefäßaufhängungen hindurch. Der Schwerpunkt der Gefäßaufhängung sollte dabei zumindest im beladenen Zustand unterhalb dieser Schwenkachse liegen.

Die Gefäßaufhängung kann beispielsweise als ein Gefäß, etwa als Becher, ausgebildet sein oder nur einen Rahmen zur Halterung eines Zentrifugiergefäßes bilden. In der Ruheposition, das heißt bei stillstehendem Rotor, hängt eine Gefäßaufhängung an ihrem Halteelementen vertikal nach unten. Sobald der Rotor in Rotation versetzt wird, wirkt eine Zentrifugalkraft auf die Gefäßaufhängung, so dass die Gefäßaufhängung aus ihrer Ruhelage ausgelenkt wird und um die durch die Halteelemente definierte Achse nach außen ausschwingt, wobei sich deren unteres Ende nach außen bewegt.

Erfindungsgemäß weist eine Gefäßaufhängung mindestens ein Anschlagelement auf, welches beim Ausschwingen der Gefäßaufhängung in Eingriff mit einem Anschlagelement eines Rotorarmes gelangt. Das Anschlagelement an der Gefäßaufhängung ist dabei so angebracht, dass es unter einem bestimmten Ausschwingwinkel an die Anschlagfläche des Anschlagelements am Rotorarm anstößt und somit den Ausschwingwinkel der Gefäßaufhängung auf diesen bestimmten Ausschwingwinkel begrenzt. Dabei weist das Anschlagelement der Gefäßaufhängung eine Anstoßfläche auf, welche komplementär zur Anschlagfläche am Anschlagelement des Rotorarmes ausgebildet ist. Dadurch wird die Kontaktfläche zwischen Anschlagfläche und Anstoßfläche im ausgeschwungenen Zustand der Gefäßaufhängung maximiert. Dies wirkt sich im Betrieb günstig auf die Kräfteverteilung und Stabilität der Winkelbegrenzung aus. Im Fall einer ebenen geradlinigen Kante an dem Rotorarm ist daher zweckmäßigerweise auch das Anschlagelement an der Gefäßaufhängung als geradlinige Kante ausgebildet.

Durch die Positionierung und Ausrichtung des Anschlagelementes an der Gefäßaufhängung wird der maximale Ausschwingwinkel der Gefäßaufhängung aus ihrer Ruhelage vorgegeben. Für einen maximalen Ausschwingwinkel von 45 ° und mit vertikal angeordneten Anschlagelementen an den Rotorarmen weist dann eine Gefäßaufhängung beispielsweise einen in der Ruheposition um 45 ° gegenüber der Vertikalen verkippten Vorsprung auf. Beim Ausschwingen der Gefäßaufhängung um 45 ° aus ihrer Ruhelage ist dieser Vorsprung in die Vertikale gekippt und stößt an dem ebenfalls vertikal ausgerichteten Anschlagelements eines Rotorarmes an. Eine Begrenzung des Ausschwingwinkels auf 45 ° ist besonders vorteilhaft für bestimmte Zentrifugationsanwendungen. Je nach Anwendung kann auch eine Winkelbegrenzung auf einen anderen maximalen Ausschwingwinkel sinnvoll sein. Die Anschlagelemente von Rotorarmen und Gefäßaufhängungen können daher auch für andere Ausschwingwinkel, beispielsweise 30 ° oder 60 °, angeordnet sein.

In einer bevorzugten Weiterbildung einer Gefäßaufhängung ist diese bei Stillstand des Rotors im unausgeschwungenen Zustand des Rotors in mindestens zwei verschiedenen Orientierungen, bezogen auf eine Drehung der Gefäßaufhängung um ihre eigene zur eigenen Schwenkachse senkrechte Achse, in den Rotor einsetzbar. In der Regel weist eine Gefäßaufhängung zwei Halteelemente auf, welche ein Schwenkachse definieren. Diese beiden Haltelemente sind vorzugsweise gegenüberliegend an der Gefäßaufhängung angeordnet. Günstigerweise ist die Gefäßaufhängung dabei so ausgestaltet, dass sie an diesen beiden Gefäßaufhängungen in beiden um 180° verschiedenen Orientierungen in den Rotor eingehängt werden kann. Die Orientierung bezieht sich hier auf eine Rotation der Gefäßaufhängung um eine eigene zur eigenen Schwenkachse senkrechte Achse. Zusätzlich zu den beiden um 180° verschiedenen Orientierungen, welche durch zwei Haltelemente erreicht werden können, ist es auch denkbar, dass zusätzliche Haltelemente an der Gefäßaufhängung angebracht sind, so dass auch eine Aufhängung in anderen Orientierungen ermöglicht wird. Beispielsweise können weitere Haltelemente um jeweils 90 ° versetzt zu den beiden ersten Halteelementen angebracht sein, so dass eine Gefäßaufhängung in vier, jeweils um 90 ° verschiedenen Orientierungen einsetzbar ist. Dies könnte insbesondere bei einer Gefäßaufhängung mit im Wesentlichen rechteckigem oder quadratischem Querschnitt sinnvoll sein. Falls es dagegen unerwünscht ist, dass die Gefäßaufhängung in verschiedenen Orientierungen in den Rotor einhängbar ist, kann die Gefäßaufhängung auch so ausgestaltet sein, dass eine um 180 ° gedrehte Einhängung, beispielsweise durch eine hervorstehende Kante, blockiert wird.

Kann aber eine Gefäßaufhängung in verschiedenen Orientierungen in den Rotor eingehängt werden, so ist es möglich, für die Gefäßaufhängung mehrere unterschiedliche maximale Ausschwingwinkel zu bestimmen. Es kann auch in einer Orientierung überhaupt keine Winkelbegrenzung vorgesehen sein. Beispielsweise kann bei einer Gefäßaufhängung mit zwei möglichen Orientierungen für die eine Orientierung ein maximaler Ausschwingwinkel von 45 ° vorgesehen sein, während für die entgegensetzte Orientierung keine Winkelbegrenzung vorgesehen ist und die Gefäßaufhängung während der Rotation frei ausschwingt.

In einer bevorzugten Variante weist jedoch die Gefäßaufhängung für jede Orientierung ein Anschlagelement für eine Winkelbegrenzung auf. In einer bevorzugten Variante ist die Gefäßaufhängung in genau zwei um 180 ° verschiedenen Orientierungen in den Rotor einsetzbar und weist für jede der beiden Orientierungen jeweils ein Anschlagelement auf, wovon eines unter einem Ausschwingwinkel von 45 ° und das andere unter einem Ausschwingwinkel von 90° in das Anschlagelement eines Rotorarmes eingreift. Auf diese Weise kann ein und dieselbe Gefäßaufhängung für verschiedene Anwendungen mit unterschiedlichen bevorzugten Ausschwingwinkeln verwendet werden.

In einer Weiterbildung der Gefäßaufhängung ist diese becherförmig mit einer geschlossenen Wand und geschlossenem Boden ausgestaltet. Der Becher kann Unterteilungen zur Aufnahme von einem oder mehreren Probengefäßen aufweisen. Alternativ kann der Becher auch mit einem Adapter zur Positionierung von solchen Probengefäßes ausgestattet werden. Denkbar ist auch ein Deckel, mit dem der Becher auch nach oben abgeschlossen und eventuell mit einer Dichtung abgedichtet werden kann. Die Ausgestaltung als geschlossener Becher bietet den Vorteil, dass eventuell aus Probengefäßen ausgelaufene Flüssigkeiten oder Substanzen in dem Becher aufgefangen werden und nicht den gesamten Rotor und die übrigen Gefäßaufhängungen verunreinigen.

Alternativ kann die Gefäßaufhängung auch nur als Rahmen ausgestaltet sein, in welchen eine eigentliche Gefäßhalterung eingesetzt wird. Der Rahmen umfasst dann wenigstens die zur Halterung wesentlichen Komponenten und ein Anschlagelement sowie eine Aufnahme für eine Gefäßhalterung. Die Gefäßhalterung kann ihrerseits Aufnahmen für ein oder mehrere Probengefäße aufweisen. Dabei ist die Gefäßhalterung unabhängig von der eigentlichen Gefäßaufhängung austauschbar. Dies bietet den Vorteil, dass eine beispielsweise durch Probenbruch verunreinigte Gefäßhalterung zur Reinigung entnehmbar ist, während die eigentliche Gefäßaufhängung, welche durch ihre Mechanik den Ausschwingwinkel bestimmt, weiterverwendbar ist und im Rotor verbleiben kann.

In einer bevorzugten Weiterbildung einer als Rahmen ausgestalteten Gefäßaufhängung ist eine Gefäßhalterung durch Rastschluss an dieser befestigbar. Trotz einer getrennten Ausführung von Gefäßaufhängung und Gefäßhalterung ist dann während des Betriebes eine sichere Verbindung gewährleistet. Gefäßaufhängung und Gefäßhalterung können aus dem gleichen oder aus unterschiedlichen Materialien hergestellt sein. Vorwiegend ist Metall oder Kunststoff geeignet.

Eine Gefäßhalterung ist als eine Positioniervorrichtung für ein oder mehrere Probengefäße ausgestaltet. Die Gefäßhalterung kann dabei in eine offene, als Rahmen ausgestaltete, oder in eine geschlossene, als Becher geformte Gefäßaufhängung eingesetzt werden. Ein Probengefäß kann beispielsweise ein verschließbares Mikrolitergefäß, ein Kapillarröhrchen oder auch eine Probenröhrchen mit einer Filteranordnung sein. Solche Probengefäße haben in der Regel einen wesentlich kleineren Querschnitt als die eine erfindungsgemäße Gefäßaufhängung. Zum Einsatz solcher Probengefäße in einer Zentrifuge ist daher eine Adapter notwendig, mit dem die Probengefäße stabil positioniert werden. Eine Aufnahme für ein Probengefäß kann beispielsweise als eine Röhre ausgeformt sein, die dem Querschnitt des Probengefäßes angepasst ist. Die Aufnahme kann aber auch einen variablen Querschnitt aufweisen, der für verschiedene Probengefäße geeignet ist. Der variable Querschnitt ist beispielsweise durch einen Spannring realisiert. Je nach Größe und Querschnitt der Probengefäße können mehrere Aufnahmen für verschiedene Probengefäße vorgesehen sein. Beispielsweise sind in einer Gefäßhalterung drei verschiedene Aufnahmen für jeweils verschiedene Probengefäße vorgesehen. So kann eine Gefäßhalterung für unterschiedliche Größen oder Typen von Probengefäßen verwendet werden. Herkömmliche Probengefäße, die kommerziell als Massenware vertrieben werden, sind häufig mit einem angeformten Deckel ausgestattet. Bei einigen Zentrifugieranwendungen ist es aber nicht immer nötig oder manchmal gar nicht erwünscht, dass die Probengefäße geschlossen sind. Um dennoch herkömmliche Probengefäße mit Deckel verwenden zu können, ist es günstig, wenn die Positioniervorrichtung zusätzlich wenigstens eine Halterung für einen Deckel eines geöffneten Probengefäßes aufweist, damit dieser während der Zentrifugation nicht stört. Vorzugsweise ist daher eine Gefäßaufhängung mit einer Positioniervorrichtung zusätzlich mit mindestens einer Aufnahme für einen Deckel eines Probengefäße ausgestattet. Diese Aufnahme für einen Probengefäßdeckel kann auch außerhalb der eigentlichen Gefäßaufhängung angeordnet sein, um möglichst wenig Platz innerhalb der Gefäßaufhängung zu beanspruchen. So kann unter Umständen eine größere Anzahl von Probengefäßen gleichzeitig innerhalb der Gefäßaufhängung Platz finden. Die Aufnahme für einen Deckel eines Probengefäßes kann als Tasche oder Haltebügel am Außenumfang einer Gefäßaufhängung ausgebildet sein. Zusätzlich ist es günstig, wenn die Gefäßhalterung mit Positioniervorrichtung einen Drainagerand zum gezielten Auffangen und Ableiten von möglicherweise in der Gefäßhalterung übergelaufenen Probenflüssigkeiten aufweist. Eine Gefäßhalterung kann ein Rastelement oder eine Rastaufnahme aufweisen, mit dem sie eine Rastverbindung mit einer Gefäßaufhängung eingehen kann, so dass während der Zentrifugation ein stabiler Halt zwischen Gefäßaufhängung und Gefäßhalterung gewährleistet ist.

Eine derartige Gefäßhalterung kann grundsätzlich in jeder Gefäßaufhängung einer Schwenkbecherzentrifuge eingesetzt werden. Sie kann auch als selbsttragende Aufhängung ausgestaltet sein, das heißt, dass sie alle zur Aufhängung benötigten Halteelemente aufweist, um direkt in einen Rotor eingesetzt zu werden. Besonders geeignet ist sie jedoch für einen Einsatz in einer erfindungsgemäßen Gefäßaufhängung mit den in dieser Anmeldung beschriebenen Merkmalen.

Sowohl eine Gefäßaufhängung als auch eine Gefäßhalterung kann als Einwegware zur einmaligen Benutzung ausgestaltet sein. Auf diese Weise kann eine Kontamination von Proben durch wiederverwendete verschmutzte Teile vermieden werden.

In einer bevorzugten Weiterbildung einer Gefäßaufhängung weist diese eine Positioniervorrichtung und Aufnahmen für ein oder mehrere Probengefäße auf. Dabei kann die Gefäßaufhängung alle Merkmale einer Gefäßhalterung mit Positioniervorrichtung aufweisen. Diese Variante der Gefäßaufhängung entspricht einer Kombination von einer Gefäßaufhängung und einer Gefäßhalterung als ein Teil.

Die Aufgabe der Erfindung wird auch gelöst durch eine Zentrifuge mit einem Ausschwingrotor und mit einem erfindungsgemäßen System zur Gefäßaufhängung in einer Schwenkbecherzentrifuge, welches einen Ausschwingrotor und eine Gefäßaufhängung umfasst.

Die Aufgabe der Erfindung wird außerdem gelöst durch ein System zur Gefäßaufhängung in einer Schwenkbecherzentrifuge, umfassend einen Ausschwingrotor und mindestens eine Gefäßaufhängung der oben beschriebenen Art.

In einer bevorzugten Weiterbildung sind die Anschlagelemente von Ausschwingrotor und Gefäßaufhängung so ausgestaltet, dass sie bei einer Rotation des Rotors und einem daraus folgenden Ausschwingen der Gefäßaufhängung in Richtung des dann horizontalen Schwerefeldes miteinander in Eingriff gelangen. Während der Rotation des Rotors wirkt auf die Gefäßaufhängungen eine Scheinkraft in radialer Richtung als Zentrifugalkraft. Diese bewirkt das Ausschwingen der Gefäßaufhängungen aus der vertikal hängenden Position in eine ausgeschwungene Position. Bei hohen Rotationsgeschwindigkeiten, wie sie bei Laborzentrifugen erreicht werden, beträgt diese Zentrifugalkraft ein Vielfaches der auf die Gefäßaufhängungen wirkenden Gewichtskraft. Das Verhältnis zwischen der Zentrifugalkraft und der Gewichtskraft ist dabei häufig so groß, dass die eigentliche Gewichtskraft vernachlässigbar ist. Die Gefäßaufhängungen erfahren daher während der Rotation nur noch ein radial, horizontal ausgerichtetes Schwerefeld. Für die Stabilität des Rotors und der Aufhängung ist es dann günstig, wenn die Anschlagelemente zur Begrenzung des Ausschwingwinkels so ausgerichtet sind, dass die Kraftaufnahme in dieser horizontalen Richtung erfolgt. Dies kann beispielsweise einfach dadurch gelöst werden, dass das Ausschwingelement an einem Rotorarm als vertikal verlaufende Schulter ausgebildet ist, dessen Anschlagfläche parallel zur Rotationsachse liegt und zu dieser hin ausgerichtet ist. Das ein Gegenstück bildende Anschlagelement an der Gefäßaufhängung ist dann so ausgerichtet, dass es im ausgeschwungenen Zustand ebenfalls vertikal ist und in Richtung von der Rotormitte nach außen radial gegen das Anschlagelement des Rotorarmes drückt. Die Zentrifugalkraft wirkt radial nach außen, senkrecht zu Anschlagfläche und Anstoßfläche. Dadurch ist die Stabilität der Winkelbegrenzung besonders hoch. Ein Verschieben der Kontaktflächen gegeneinander wird vermieden.

Es kann auch zusätzlich jeweils ein Anschlagelement an Rotor und Gefäßaufhängung vorgesehen sein, welche zusammen ein Ausschwingen der Gefäßaufhängung nach innen verhindern. Dies kann zum Beispiel bei der Bestückung der Zentrifuge mit Proben im Ruhezustand günstig sein.

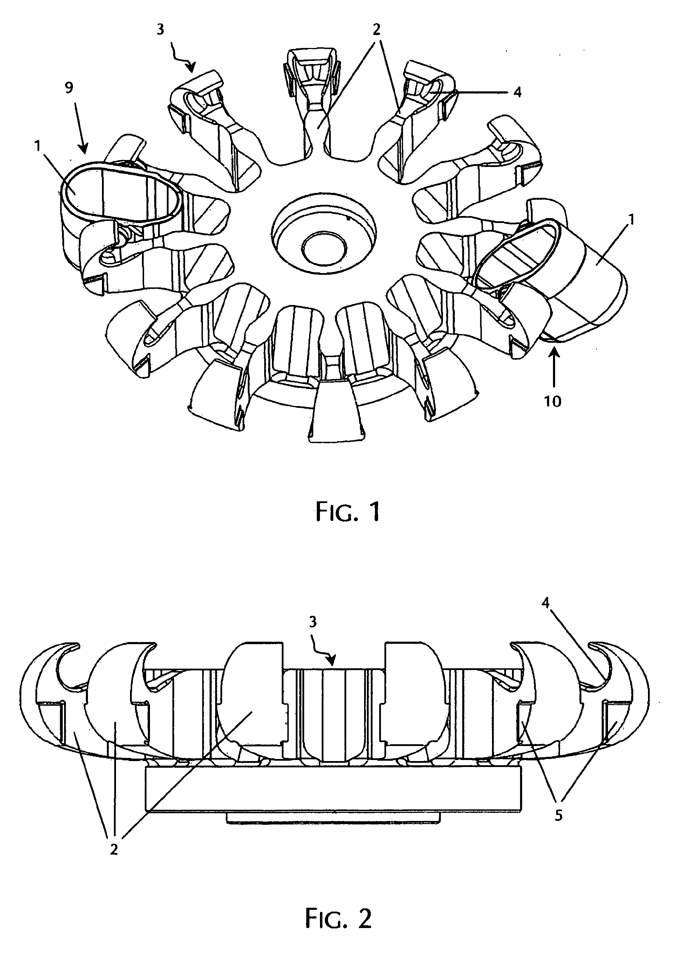

Die Erfindung wird nachfolgend anhand der in den Fig. 1 bis 8 dargestellten Ausführungsbeispiele weiter erläutert, ohne dass die Erfindung auf diese Ausführungsformen beschränkt wäre.

Es zeigen schematisch:
- Fig. 1:: einen Ausschwingrotor in perspektivischer Darstellung mit zwei eingesetzten Gefäßaufhängungen;
- Fig. 2:: den Ausschwingrotor aus Fig. 1 in Seitenansicht;
- Fig. 3:: eine Gefäßaufhängung;
- Fig. 4:: eine Detailansicht eines Rotorarmes mit Aufnahme und Anschlagelement;
- Fig. 5:: eine Detailansicht eines Rotorarmes mit Aufnahme und Anschlagelement und eingehängter Gefäßaufhängung;
- Fig. 6:: eine Gefäßaufhängung mit Positioniervorrichtung in der Seitenansicht;
- Fig. 7:: eine Gefäßaufhängung mit Positioniervorrichtung in der Draufsicht; und
- Fig. 8:: eine in einen Rotor eingehängte Gefäßaufhängung mit Positioniervorrichtung in perspektivischer Darstellung.

Ein Ausschwingrotor 3 weist einen Rotorkörper auf, von dem radial Rotorarme 2 ausgehen. Die Rotorarme 2 weisen an ihrem äußeren Ende Aufnahmen 4 auf, in welche Gefäßaufhängungen 1 an Halteelementen 6 eingehängt werden können. Eine Gefäßaufhängung 1 weist dafür zwei Halteelemente 6 auf, mit denen sie jeweils in eine Aufnahme 4 eines Rotorarmes 2 eingehängt ist. Durch die beiden Halteelemente 6 wird eine Schwenkachse gebildet, um welche die Gefäßaufhängung 1 schwenkbar gelagert ist. Bei Stillstand des Rotors befindet sich die Gefäßaufhängung 1 in Ruheposition 9, das heißt sie hängt vertikal nach unten. Während der Rotation des Rotors im Betrieb der Zentrifuge wirkt eine Zentrifugalkraft auf die Gefäßaufhängung, wodurch diese nach außen hin um die durch die Halteelemente 6 gebildete Schwenkachse ausschwenkt. Sie befindet sich dann im ausgeschwungenen Zustand 10.

An den Rotorarmen 2 sind jeweils Anschlagelemente 5 angebracht. Im ausgeschwungenen Zustand 10 wirken diese Anschlagelemente 5 der Rotorarme zusammen mit Anschlagelementen 7 der Gefäßaufhängungen 1. Die Anschlagelemente 5 der Rotorarme sind als vertikal ausgerichtete Schulter an den Rotorarmen ausgebildet. Sie weisen eine ebene Anschlagfläche auf, welche zur Rotationsachse parallel ist und zu dieser hinweist. Die Gefäßaufhängung 1 weist ebenfalls ein Anschlagelement 7 auf, welches eine zur Anschlagfläche des Anschlagelementes 5 komplementär ausgestaltete Anschlagfläche hat. Die Anschlagfläche des Anschlagelementes 7 ist demnach ebenfalls als Ebene ausgestaltet. Die Anschlagfläche des Anschlagelementes 7 ist an der Gefäßaufhängung so angeordnet, dass sie in dessen Ruheposition unter einem Winkel von 45 ° zur Vertikalen steht. Im ausgeschwungenen Zustand 10 mit einem Ausschwingwinkel von 45 ° ist diese Anschlagfläche in die Vertikale verkippt und kann so an dem ebenfalls vertikal ausgerichteten Anschlagelement 5 des Rotorarmes anstoßen. Die Ausschwingung der Gefäßaufhängung 1 ist dadurch auf den Winkel von 45 ° beschränkt.

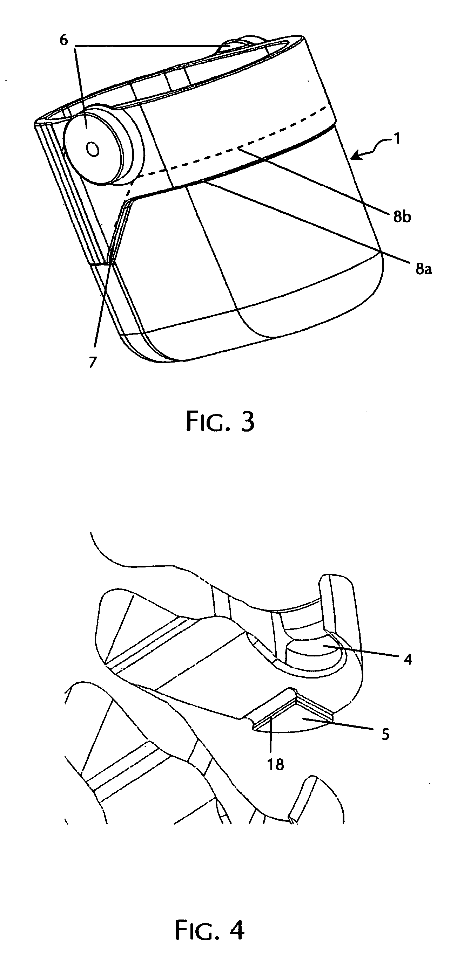

In der in Fig. 3 dargestellten Variante verläuft die Anschlagfläche des Anschlagelementes 7 tangential zum Halteelement 6. Es wirkt somit zusammen mit einem Anschlagelement 5 am Rotorarm, dessen Anschlagfläche 18 ebenfalls tangential zur Aufnahme 4 am Rotorarm ausgerichtet ist. Darüber hinaus weist die Gefäßaufhängung 1 noch eine horizontale Kante 8a auf. Diese verhindert, dass die Gefäßaufhängung 1 an ihren Halteelementen 6, welche die Schwenkachse der Gefäßaufhängung definieren, auch in einer um 180° gedrehten Orientierung in den Ausschwingrotor 3 eingesetzt werden kann. Die Kante 8a ist geringfügig gegen eine zum Haltelement 6 tangentiale Ebene verschoben. Damit eine um 180 ° verdrehte Einsetzung der Gefäßaufhängung möglich ist, könnte diese Kante in die tangentiale Ebene, angedeutet durch die gestrichelte Linie, verschoben sein und somit ein zweites Anschlagelement 8b für die um 180° gedrehte Orientierung bilden. Dann um 180° verdreht eingesetzt, könnte die Gefäßaufhängung im Betrieb des Rotors bis zu einem Winkel von 90° ausschwingen, bis die Anstoßfläche des Anschlagelementes 8b vertikal ausgerichtet ist und mit der vertikal ausgerichteten Anschlagfläche 18 des Anschlagelementes 5 am Rotorarm zusammenwirkt.

Tangential angeordnete Anstoßflächen der Anschlagelemente 7 und 8b an der Gefäßaufhängung wirken zusammen mit einer ebenfalls tangential angeordneten Anschlagfläche 18 am Rotorarm. Wenn die Anschlagfläche 18 am Rotorarm dagegen von der zum Schwenklager (gebildet durch die Aufnahme 4 und Halteelement 6) tangentialen Ebene beabstandet ist, so sind zweckmäßig auch die Anschlagflächen der Anschlagelemente 7 und 8b von den tangentialen Ebenen entsprechend beabstandet.

Zum Einhängen der Halteelemente 6 in die Rotorarme, weisen die Rotorarme Aufnahmen 4 auf, welche als schräg nach oben zur Rotormitte hin geöffnete Schwenklager ausgebildet sind. Die Aufnahmen bilden so Haken, welche die eingehängten Halteelemente 6 von außen und oben her umfassen, so dass die Gefäßaufhängung 1 mit den Halteelementen 6 nicht in rein vertikaler Richtung nach oben aus dem Ausschwingrotor herausgenommen werden kann.

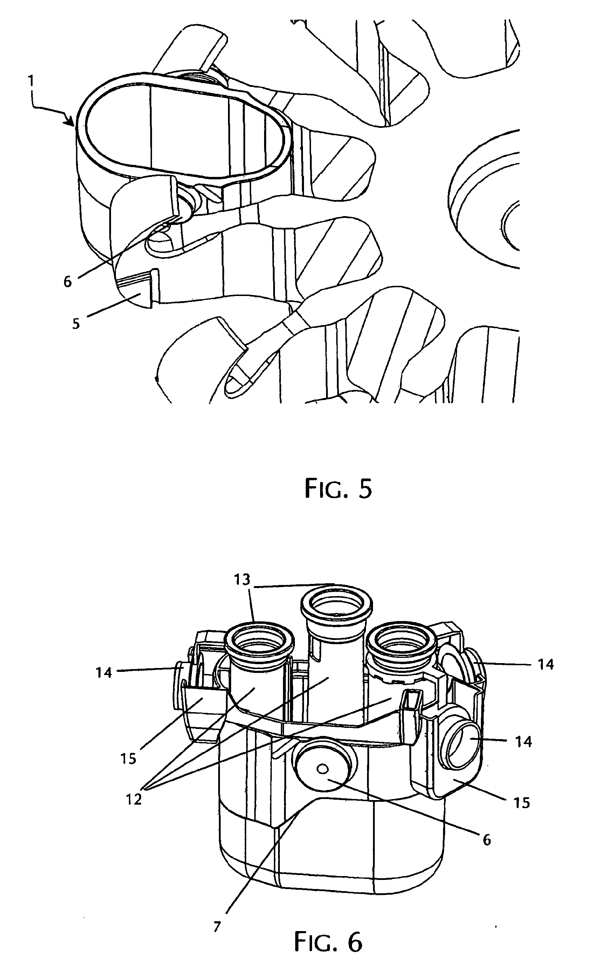

In den Figuren 6 bis 8 ist eine Gefäßaufhängung mit Positioniervorrichtung gezeigt. Die Positioniervorrichtung ist hier als Gefäßhalterung 11 in eine becherförmige Gefäßaufhängung 1 eingesetzt. Die Gefäßhalterung 11 weist Aufnahmen 12 für drei rohrförmige Probengefäße 13 auf. Für die Deckel 14 der Probengefäße sind als Taschen ausgebildete Aufnahmen 15 auf der Außenseite der Gefäßaufnahme 1 angebracht. Diese Deckelaufnahmen 15 sind so angeordnet, dass sie im eingehängten Zustand nicht mit den Rotorarmen 2 kollidieren. Die Deckel 14 der Probengefäße sind mit den Probengefäßen 13 verbunden. Die Gefäßhalterung weist außerdem einen Drainagerand 17 auf, durch welchen ausgelaufene Probenflüssigkeit gezielt aufgefangen und abgeleitet werden kann.

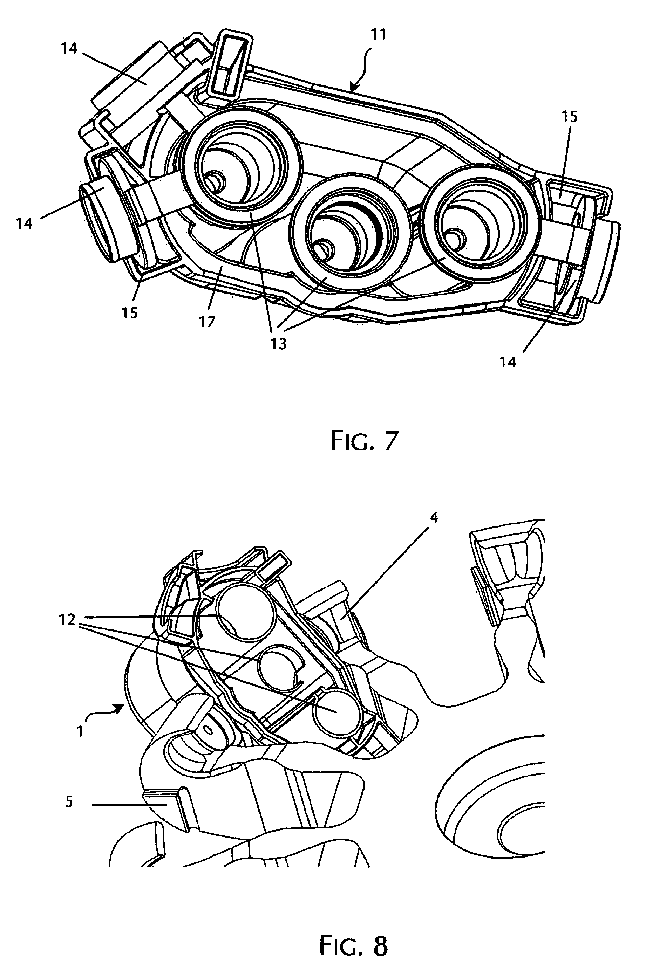

Wie auf der rechten Seite der Fig. 6 und der linken Seite der Fig. 7 erkennbar, besteht eines der Probengefäße 13 aus zwei ineinander gesteckten Röhrchen, wie sie beispielsweise für Filtrationszwecke verwendet werden. Beide Röhrchen weisen einen Deckel 14 auf. Entsprechend ist für jeden der beiden Deckel 14 außerhalb der Gefäßaufhängung 1 an deren Außenumfang eine Deckelaufnahme 15 vorhanden.

## Patentansprüche

1. System zur Gefäßaufhängung (1) in einer Schwenkbecherzentrifuge, umfassend mindestens eine Gefäßaufhängung (1) und einen Ausschwingrotor (3) zur Aufhängung von Gefäßaufhängungen (1) mit jeweils mindestens zwei Halteelementen (6), wobei der Ausschwingrotor (3) eine Mehrzahl von radial angeordneten Rotorarmen (2) umfasst, welche an ihrem äußeren Ende jeweils mindestens eine Aufnahme (4) aufweisen, in die mindestens ein Halteelement (6) einer Gefäßaufhängung (1) schwenkbar einsetzbar ist, so dass jeweils eine Gefäßaufhängung (1) zwischen zwei benachbarten Rotorarmen (2) einhängbar ist,
wobei die Gefäßaufhängung (1) um die durch ihre beiden Halteelemente (6) definierte, horizontale, zur Rotationsachse des Rotors tangentiale Achse schwenkbar gelagert ist, und während einer Rotation des Rotors (3) durch die Zentrifugalkraft bedingt nach außen ausschwingt, und wobei an jedem Rotorarm (2) mindestens ein Anschlagelement (5) vorgesehen ist,
**dadurch gekennzeichnet, dass** die Gefäßaufhängung (1) mindestens ein Anschlagelement (7) aufweist,
dass jeweils ein Halteelement (6) der Gefäßaufhängung (1) und die zugehörige Aufnahme (4) des Rotorarmes (2) stabil ausgebildet sind und ein relativ zum Rotorarm (2) ortsfestes Schwenklager bilden, und das Anschlagelement (5) am Rotorarm (2) als eine Schulter oder Rippe ausgestaltet ist und eine Flanke der Schulter beziehungsweise der Rippe eine Anschlagfläche (18) aufweist, welche als Begrenzung von horizontalen Bewegungen in Richtung vor der Rotormitte nach außen ausgebildet ist.

2. System gemäß Anspruch 1,
**dadurch gekennzeichnet,**
**dass** die Zahl der darin einhängbaren Gefäßaufhängungen (1) der Anzahl der Rotorarme (2) entspricht.

3. System gemäß einem der vorhergehenden Ansprüche,
**dadurch gekennzeichnet,**
**dass** an beiden, den jeweils benachbarten Rotorarmen (2) zugewandten, Seiten jedes Rotorarmes (2) je ein Anschlagelement (5) vorgesehen ist.

4. System gemäß einem der vorhergehenden Ansprüche,
**dadurch gekennzeichnet,**
**dass** die Aufnahmen (4) der Rotorarme (2) für die Halteelemente (6) der Gefäßaufhängungen (1) als nach schräg nach oben zur Mitte des Rotors (3) hin geöffnete Schwenklager ausgebildet sind, so dass ein Herausheben der Gefäßaufhängungen (1) in rein vertikaler Richtung verhindert wird.

5. System gemäß einem der vorhergehenden Ansprüche,
**dadurch gekennzeichnet,**
**dass** die Anschlagelemente (5) integral angeformte Bestandteile der Rotorarme (2) sind.

6. System gemäß einem der vorhergehenden Ansprüche,
**dadurch gekennzeichnet,**
**dass** die Anschlagelemente (5) zur Bildung von Sollbruchstellen schwächer ausgeführt sind als die Aufnahmen (4) der Rotorarme (2).

7. System gemäß einem der vorhergehenden Ansprüche,
**dadurch gekennzeichnet,**
**dass** die Gefäßaufhängung (1) mindestens ein als Rippe oder Schulter ausgebildetes Anschlagelement (7) mit einer zu einer Anschlagfläche (18) eines Rotorarmes (2) komplementär ausgestalteten Anstoßfläche aufweist, so dass dieses beim Ausschwingen der Gefäßaufhängung (1) unter einem vorbestimmten Ausschwingwinkel an ein Anschlagelement (5) eines Rotorarmes (2) anstößt und somit den Ausschwingwinkel auf diesen vorbestimmten Ausschwingwinkel begrenzt.

8. System gemäß Anspruch 7,
**dadurch gekennzeichnet,**
**dass** das Anschlagelement (7) integral angeformter Bestandteil davon ist.

9. System gemäß einem der Ansprüche 7 bis 8,
**dadurch gekennzeichnet,**
**dass** die Gefäßaufhängung (1) im unausgeschwungen Zustand in mindestens zwei verschiedenen Orientierungen, bezogen auf eine Drehung der Gefäßaufhängung (1) um eine eigene, zur eigenen Schwenkachse senkrechte Achse, in den Rotor (3) einsetzbar ist.

10. System gemäß Anspruch 9,
**dadurch gekennzeichnet,**
**dass** sie für jede Orientierung ein Anschlagelement (7, 8b) aufweist.

11. Gefäßaufhängung (1) gemäß Anspruch 10,
**dadurch gekennzeichnet,**
**dass** die Gefäßaufhängung (1) in zwei um 180° verschiedenen Orientierungen in den Rotor einsetzbar ist und für beide Orientierungen jeweils ein Anschlagelement (7) aufweist, wovon ein Anschlagelement (7) unter einem Ausschwingwinkel von 45° und das andere Anschlagelement (8b) unter einem Ausschwingwinkel von 90° in Eingriff mit einem Anschlagelement (5) des Rotors (3) gelangt.

12. System gemäß einem der Ansprüche 7 bis 11,
**dadurch gekennzeichnet,**
**dass** die Gefäßaufhängung (1) becherförmig mit geschlossener Wand und geschlossenem Boden ausgestaltet ist.

13. System gemäß einem der Ansprüche 7 bis 11,
**dadurch gekennzeichnet,**
**dass** die Gefäßaufhängung (1) einen Rahmen bildet, in den eine Gefäßhalterung einsetzbar ist.

14. System gemäß Anspruch 13,
**dadurch gekennzeichnet,**
**dass** die Gefäßhalterung durch Rastschluss an der Gefäßaufhängung (1) befestigbar ist.

15. System gemäß einem der Ansprüche 7 bis 14,
**dadurch gekennzeichnet,**
**dass** die Gefäßaufhängung (1) eine Positioniervorrichtung (11) und mindestens eine Aufnahme (12) für ein oder mehrere Probengefäße (13) aufweist.

16. System gemäß Anspruch 15,
**dadurch gekennzeichnet,**
**dass** die Gefäßaufhängung (1) an ihrem Außenumfang wenigstens eine Aufnahmevorrichtung (15) für einen Deckel (14) eines Probengefäßes (13) aufweist.

17. System gemäß einem der Ansprüche 1 bis 16,
**dadurch gekennzeichnet,**
**dass** das System eine Gefäßhalterung (11) für Probengefäße zur Verwendung in einer Gefäßaufhängung (1) einer Schwenkbecherzentrifuge aufweist,
wobei die Gefäßhalterung (11) in eine Gefäßaufhängung (1) einsetzbar ist und mindestens eine Aufnahme (12) für mindestens ein Probengefäß (13) aufweist.

18. System gemäß Anspruch 17,
**dadurch gekennzeichnet,**
**dass** die Gefäßhalterung (11) an ihrem Außenumfang wenigstens eine Aufnahmevorrichtung (15) für einen Deckel (14) eines Probengefäßes (13) aufweist.

## Claims

1. A system for suspending vessels (1) in a swinging bucket centrifuge, comprising at least one vessel suspension (1) and a swing-out rotor (3) for suspending vessel suspension (1) with at least two holding elements (6) each, with the swing-out rotor (3) having a plurality of radially arranged rotor arms (2) which comprise at least one receiver (4) each at their outer end in which at least one holding element (6) of a vessel suspension (1) can be inserted in a swivelable manner, so that one vessel suspension (1) each can be suspended between two adjacent rotor arms (2), with the vessel suspension (1) being swivelably held about the horizontal axis which is defined by its two holding elements (6) and is tangential in relation to the rotational axis of the rotor, and swinging outwardly during a rotation of the rotor (3) as a result of the centrifugal force, and with at least one stop element (5) being provided on each rotor arm,
**characterized in that**
the vessel suspension (1) comprises at least one stop element (7), one holding element (6) each of the vessel suspension (1) and the associated receiver (4) of the rotor arm (2) are arranged in a stable manner and form a pivot bearing which is stationary in relation to the rotor arm (2), and the stop element (5) on the rotor arm (2) is arranged as a shoulder or rib and one flank of the shoulder or rib has a stop surface (18) which is arranged as a limit for horizontal movements in the direction before the center of the rotor to the outside.

2. A system according to claim 1,
**characterized in that**
the number of vessel suspensions (1) to be suspended therein corresponds to the number of rotor arms (2).

3. A system according to one of the preceding claims,
**characterized in that**
one stop element (5) each is provided on both sides of each rotor arm (2) facing the respectively adjacent rotor arms (2).

4. A system according to one of the preceding claims,
**characterized in that**
the receivers (4) of the rotor arms (2) for the holding elements (6) of the vessel suspensions (1) are arranged as pivot bearings opened upwardly in an inclined manner towards the center of the rotor (3), so that lifting out the vessel suspension (1) in a purely vertical direction is prevented.

5. A system according to one of the preceding claims,
**characterized in that**
the stop elements (5) are integrally secured components of the rotor arms (2).

6. A system according to one of the preceding claims,
**characterized in that**
the stop elements (5) are provided with a weaker arrangement for forming predetermined breaking points than the receivers (4) of the rotor arms (2).

7. A system according to one of the preceding claims,
**characterized in that**
the vessel suspension (1) comprises at least one stop element (7) arranged as a rib or shoulder with an abutment surface arranged in a complementary manner in relation to a stop surface (18) of a rotor arm (2), so that said abutment surface will abut on a stop element (5) of a rotor arm (2) under a predetermined swing-out angle during the outward swinging of the vessel suspension (1) and thus limits the swing-out angle to said predetermined swing-out angle.

8. A system according to claim 7,
**characterized in that**
the stop element (7) is an integrally secured component thereof.

9. A system according to one of the claims 7 to 8,
**characterized in that**
the vessel suspension (1) can be inserted in the rotor (3) in at least two different orientations in the state where it is not swung out, relating to a rotation of the vessel suspension (1) about an own axis which is perpendicular to the own pivoting axis.

10. A system according to claim 9,
**characterized in that**
it comprises a stop element (7, 8b) for each orientation.

11. A vessel suspension (1) according to claim 10,
**characterized in that**
the vessel suspension (1) can be inserted in two orientations in the rotor which differ by 180° and comprises one stop element (7) each for both orientations, whereof one stop element (7) comes into engagement with a stop element (5) of the rotor (3) under a swing-out angle of 45° and the other stop element (8b) under a swing-out angle of 90°.

12. A system according to one of the claims 7 to 11,
**characterized in that**
the vessel suspension (1) is arranged in a cup-like manner with a closed wall and closed floor.

13. A system according to one of the claims 7 to 11,
**characterized in that**
the vessel suspension (1) forms a frame in which a vessel holder can be inserted.

14. A system according to claim 13,
**characterized in that**
the vessel holder can be fastened to the vessel suspension (1) by a latched connection.

15. A system according to one of the claims 7 to 14,
**characterized in that**
the vessel suspension (1) comprises one positioning apparatus (11) and at least one receiver (12) for one or several sample vessels (13).

16. A system according to claim 15,
**characterized in that**
the vessel suspension (1) comprises on its outside circumference at least one receiving apparatus (15) for a cover (14) of a sample vessel (13).

17. A system according to one of the claims 1 to 16,
**characterized in that**
the system comprises a vessel holder (11) for sample vessels for use in a vessel suspension (1) of a swinging bucket centrifuge, with the vessel holder (11) being insertable in a vessel suspension (1) and comprising at least one receiver (12) for at least one sample vessel (13).

18. A system according to claim 17,
**characterized in that**
the vessel holder (11) comprises on its outer circumference at least one receiving apparatus (15) for a cover (14) of a sample vessel (13).

## Revendications

1. Système de suspension de récipients (1) dans une centrifugeuse à godets oscillants, comprenant au moins une suspension de récipient (1) et un rotor oscillant (3) pour suspendre des suspensions de récipient (1) avec chacune au moins deux éléments de maintien (6), le rotor centrifuge (3) comprenant une pluralité de bras de rotor (2) disposés dans le sens axial, qui présentent à leur extrémité extérieure au moins un logement (4) dans lequel au moins un élément de maintien (6) d'une suspension de récipient (1) peut être introduit de façon pivotante, de sorte qu'une suspension de récipient (1) peut être suspendue entre deux bras de rotor (2) voisins,
dans lequel la suspension de récipient (1) est supporté avec possibilité de pivoter autour d'un axe horizontal défini par les deux éléments de maintien (6) et tangent de l'axe de rotation du rotor et pivote vers l'extérieur sous l'action de la force centrifuge pendant une rotation du rotor (3), et dans lequel au moins un élément de butée (5) est prévu sur chaque bras de rotor (2),
**caractérisé en ce que**
la suspension de récipient (1) présente au moins un élément de butée (7), **en ce qu'**un élément de maintien (6) de la suspension de récipient (1) et le logement correspondant (4) du bras de rotor (2) ont une forme stable et forment un palier pivotant stationnaire par rapport au bras de rotor (2), et l'élément de butée (5) du bras de rotor (2) est conformé comme un épaulement ou une nervure et un flanc de l'épaulement ou de la nervure présente une surface de butée (18) qui est conçue pour limiter les mouvements horizontaux vers l'extérieur en direction du milieu du rotor.

2. Système selon la revendication 1,
**caractérisé en ce que**
le nombre de suspensions de récipient (1) pouvant y être suspendues correspond au nombre de bras de rotor (2).

3. Système selon l'une des revendications précédentes,
**caractérisé en ce qu'**il
est prévu un élément de butée (5) sur les deux côtés de chaque bras de rotor (2) orientés vers les bras de rotor (2) voisins.

4. Système selon l'une des revendications précédentes,
**caractérisé en ce que**
les logements (4) des bras de rotor (2) pour les éléments de maintien (6) des suspensions de récipient (1) sont conformés comme des paliers pivotants ouverts en oblique vers le haut et le milieu du rotor (3), de façon à empêcher les suspensions de récipient (1) de se soulever dans un sens uniquement vertical.

5. Système selon l'une des revendications précédentes,
**caractérisé en ce que**
les éléments de butée (5) sont des composants des bras de rotor (2) formés d'un seul tenant.

6. Système selon l'une des revendications précédentes,
**caractérisé en ce que**
les éléments de butée (5) sont réalisés moins solides que les logements (4) des bras de rotor (2) pour former des zones de rupture.

7. Système selon l'une des revendications précédentes,
**caractérisé en ce que**
la suspension de récipient (1) présente au moins un élément de butée (7) conformé comme une nervure ou un épaulement avec une surface de butée complémentaire d'une surface de butée (18) d'un bras de rotor (2), de sorte qu'il bute, lors du pivotement de la suspension de récipient (1) sous un angle d'oscillation prédéterminé, sur un élément de butée (5) d'un bras de rotor (2) et limite ainsi l'angle d'oscillation à cet angle d'oscillation prédéterminé.

8. Système selon la revendication 7,
**caractérisé en ce que**
l'élément de butée (7) en est un composant formé d'un seul tenant.

9. Système selon l'une des revendications 7 à 8,
**caractérisé en ce que**
la suspension de récipient (1), dans l'état non pivoté, peut être introduite dans le rotor (3) selon au moins deux orientations différentes par rapport à une rotation de la suspension de récipient (1) autour d'un axe propre perpendiculaire à son propre axe de pivotement.

10. Système selon la revendication 9,
**caractérisé en ce qu'**il
présente un élément de butée (7, 8b) pour chaque orientation.

11. Suspension de récipient (1) selon la revendication 10,
**caractérisé en ce que**
la suspension de récipient (1) peut être introduite dans le rotor selon deux orientations différentes de 180° et présente pour chacune des deux orientations un élément de butée (7), l'un des éléments de butée (7) set mettant en prise avec l'élément de butée (5) du rotor (3) sous un angle d'oscillation de 45° et l'autre élément de butée (8b) sous un angle d'oscillation de 90°.

12. Système selon l'une des revendications 7 à 11,
**caractérisé en ce que**
la suspension de récipient (1) est en forme de godet à paroi fermée et fond fermé.

13. Système selon l'une des revendications 7 à 11,
**caractérisé en ce que**
la suspension de récipient (1) forme un cadre dans lequel une fixation de récipient peut être introduite.

14. Système selon la revendication 13,
**caractérisé en ce que**
la fixation de récipient peut être fixée à la suspension de récipient (1) par encliquetage.

15. Système selon l'une des revendications 7 à 14,
**caractérisé en ce que**
la suspension de récipient (1) présente un dispositif de positionnement (11) et au moins un logement (12) pour un ou plusieurs récipients à échantillons (13).

16. Système selon la revendication 15,
**caractérisé en ce que**
la suspension de récipient (1) présente sur sa circonférence extérieure au moins un dispositif de réception (15) pour un couvercle (14) d'un récipient à échantillons (13).

17. Système selon l'une des revendications 1 à 16,
**caractérisé en ce que**
le système comprend une fixation de récipient (11) pour les récipients à échantillons destinée à être utilisée dans une suspension de récipient (1) d'une centrifugeuse à godets oscillants, la fixation de récipient (11) pouvant être introduite dans une suspension de récipient (1) et présentant au moins un logement (12) pour au moins un récipient à échantillons (13).

18. Système selon la revendication 17,
**caractérisé en ce que**
la fixation de récipient (11) présente sur sa circonférence extérieure au moins un dispositif de logement (15) pour un couvercle (14) d'un récipient à échantillons (13).
